(19) **Europäisches Patentamt** / **European Patent Office** / **Office européen des brevets**

(11) **EP 2 116 820 B1**

(12) # EUROPÄISCHE PATENTSCHRIFT

(45) Veröffentlichungstag und Bekanntmachung des Hinweises auf die Patenterteilung:
**05.09.2018 Patentblatt 2018/36**

(51) Int Cl.:
***G01F 23/284*** *(2006.01)*

(21) Anmeldenummer: **08155923.9**

(22) Anmeldetag: **08.05.2008**

(54) **Verwendung einer Anpassvorrichtung, Messgerät mit Anpassvorrichtung und Verfahren zum Betreiben eines Wellenleiters**

Use of an impedance matching device, measuring device with impedance matching device, and method of operating a waveguide

Usage d'un dispositif d'adaptation d'impédance, appareil de mesure avec dispositif d'adaptation d'impédance et procédé pour opérer un guide d'ondes

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(43) Veröffentlichungstag der Anmeldung:
**11.11.2009 Patentblatt 2009/46**

(73) Patentinhaber: **VEGA Grieshaber KG**
**77709 Wolfach (DE)**

(72) Erfinder:
• **Kienzle, Klaus**
**77736, Zell am Harmersbach (DE)**

• **Fehrenbach, Josef**
**77716, Haslach (DE)**
• **Motzer, Jürgen**
**77723, Gengenbach (DE)**

(74) Vertreter: **Maiwald Patent- und Rechtsanwaltsgesellschaft mbH Elisenhof Elisenstraße 3 80335 München (DE)**

(56) Entgegenhaltungen:
**EP-A- 1 643 222     US-A- 5 305 237**
**US-A- 5 872 494     US-A1- 2003 179 148**
**US-A1- 2007 008 212**

**Beschreibung**

Die vorliegende Erfindung betrifft das Gebiet der Messtechnik und insbesondere die Füllstandsmesstechnik, die Druckmesstechnik und die Grenzhöhenmesstechnik. Im speziellen betrifft die die vorliegende Erfindung eine Anpassvorrichtung, eine Antennenanordnung, ein Messgerät und ein Verfahren zum Verschließen eines Wellenleiters.

Wellenleiter können als Hohlleiter realisiert werden. In einem Hohlleiter der in einem Mode angeregt wird kann eine elektromagnetische Welle entstehen, die es erlaubt eine Information zu übertragen.

Das Dokument US 5,872,494 beschreibt eine Wellenleiter-Anordnung aufweisend einen ersten Wellenleiterabschnitt mit einer ersten Wellenleiter Bohrung und einen zweiten Wellenleiterabschnitt, befestigt an dem ersten Wellenleiter-Abschnitt und aufweisend eine zweite Wellenleiter Bohrung, welche axial an der ersten Wellenleiter Bohrung ausgerichtet ist. Ferner weist die Wellenleiter-Anordnung eine mechanische Barriere mit einem ersten Stiel-Abschnitt, angeordnet in dem ersten Wellenleiter-Abschnitt, einem zweiten Stiel-Abschnitt, angeordnet in dem zweiten Wellenleiter Abschnitt und eine erhöhte ringförmige Schulter auf, angeordnet in einer Prozessabdicht-Höhle, wobei die erhöhte ringförmige Schulter eine Breite aufweist, welche sich radial nach außen von einem äußeren Durchmesser des Stiel-Abschnitts bis etwa $\lambda_G/2$ erstreckt und eine Höhe aufweist, welche sich axial zwischen dem ersten und dem zweiten Wellenleiter-Abschnitt um etwa ¼ $\lambda_G$ erstreckt.

Aus der EP 1 643 222 ist eine Antennenkonstruktion bekannt. Die Antennenkonstruktion umfasst einen mittleren Abschnitt, der ausgebildet ist, um die Antennenkonstruktion auf einem Flansch eines Füllstandmesssystems lagern zu können.

Die US 2003/0179148 betrifft eine Hornantenne an einem Radar-Füllstandsmessgerät zur Bestimmung eines Pegels einer Oberfläche eines in einem Tank gespeicherten Mediums. Die Antenne umfasst ein erstes leitfähiges Gehäuse mit einer Wellenleiteröffnung, die mit einem Wellenleiter verbindbar ist, eine erste Öffnung, die von der Wellenleiteröffnung getrennt ist, und einen ersten divergenten Abschnitt zwischen der Wellenleiteröffnung und der ersten Öffnung.

Die US 5,305,237 zeigt ein System zum Überwachen eines Niveaus von fließfähigem Material, das in einem transportablen Gefäß enthalten ist, das Mikrowellen-Messtechnik verwendet. Das System enthält eine Mikrowellenlinse/ Dichtungsanordnung, eine Mikrowellen-Sende- /Empfangseinheit. Die Linsen-/ Dichtungsanordnung ist dauerhaft an dem Behälter befestigt.

Die US 2007/0008212 zeigt eine Hornantenne, die zur Verwendung mit einer Pegelmessvorrichtung geeignet ist und eine zusammengesetzte Emitterstruktur aufweist. Die Emitterstruktur oder -anordnung umfasst einen Emitter und einen Stecker. Die Pegelmessvorrichtung umfasst einen Kopplungsmechanismus, der das Entfernen der Hornantenne unabhängig von dem Emitterstruktur ermöglicht.

Ferner sind Antennensysteme mit einer Anpassvorrichtung bekannt, welche radial abgedichtet ist.

Es ist eine Aufgabe der vorliegenden Erfindung, einen Wellenleiter effizient zu verschließen.

Gemäß den beigefügten Ansprüchen, wird erfindungsgemäß eine Verwendung einer Anpassvorrichtung, ein Messgerät und ein Verfahren zum Betreiben eines Wellenleiters bereitgestellt.

Eine Anpassvorrichtung mag einen Anpasskegel aufweisen. Der Anpasskegel kann auch als Verschlussvorrichtung bezeichnet werden. Der Anpasskegel mag beispielsweise aus PTFE (Polytetrafluorethylen) gefertigt sein an dem eine radiale Aufweitung angebracht sein mag. Falls der Anpasskegel keine Aufweitung aufweist, mag der Anpasskegel alleine Anpassvorrichtung genannt werden. Evtl. ist es möglich, diese radiale Aufweitung derart zu formen, dass im Wesentlichen mittels der Formung der radialen Aufweitung ein Abdichten erreicht werden kann. Es kann daher mittels der Formung vermieden werden ein zusätzliches Dichtelement oder eine zusätzliche Dichteinrichtung zu verwenden, wie beispielsweise einen O-Ring. Als eine Formung mittels der eine Dichtwirkung erzielbar sein mag, mag eine Rille oder eine Vielzahl von Rillen oder zumindest eine Riffelung an der radialen Aufweitung angebracht sein.

Die Anpassvorrichtung oder das Anpasselement mag dazu dienen, eine Öffnung oder Bohrung eines Wellenleiters im Wesentlichen zu verschließen und gleichzeitig einen Frequenzgang einer Anordnung von Wellenleiter mit Anpassvorrichtung derart anzupassen, dass die Anordnung für eine vorgebbare Frequenz eine geringe Dämpfung aufweist und für diese Wellenlänge nur einen möglichst geringen Anteil der Welle reflektiert.

Ein zusätzliches Dichtelement, welches axial an der radialen Aufweitung des Anpasskegel angebracht ist, mag die Dichtwirkung erhöhen. Dieses Dichtelement kann auch Dichtring oder Dichteinrichtung bezeichnet werden. Denkbare Dichtelemente mögen ein O-Ring, eine Flachdichtung, eine Wellendichtung oder auch eine kombinierte Dichtung (Metall-Kunststoff) sein.

Als radiale Abdichtung mag eine Abdichtung bezeichnet werden, welche außen, d.h. an der Mantelfläche, an einem Zylinder oder Kegel entlang des Radius des abzudichtenden Teiles angeordnet ist. Alternativ mag eine radiale Abdichtung in einer vertiefenden Nut des abzudichtenden Teils angeordnet sein. Ein radiales Abdichten mag demnach ein Abdichten bezeichnen, welches außen an einem Zylinder oder Kegel entlang des Radius des zu dichtenden Teils erfolgt.

Als axiale Abdichtung mag eine Abdichtung bezeichnet werden, welche an einer radialen Aufweitung angeordnet ist. D.h. ein axiales Abdichten mag ein Abdichten bezeichnen, welches an einer radialen Aufweitung erfolgt. An der radialen Aufweitung ist die Dichtung dann in der Achsenrichtung ein oder beidseitig angebracht. Die axiale Abdichtung mag entlang einer Ausbreitungsrichtung einer elektromagnetischen Welle erfolgen, d.h. eine axiale Abdichtung mag in einer Ausbreitungsrichtung der elektromagnetischen Welle vor oder hinter der radialen Aufweitung liegen.

Oder in anderen Worten mag eine axial angeordnete Abdichtung einen Materiefluss unterbinden, welcher sich in radialer Richtung einer Anpassvorrichtung bewegen würde, d.h. in senkrechter Richtung zu der Längsachse der Anpassvorrichtung.

Eine radial angeordnete Abdichtung mag einen Materiefluss unterbinden, welcher sich parallel zu einer Längsachse der Anpassvorrichtung bewegen würde.

Mit einer axialen Anordnung eines Dichtrings, d.h. einer axialen Abdichtung, mag sich ein Wellenleiter bereitstellen lassen, insbesondere mag sich ein Antennensystem für ein Füllstandradar bereitstellen lassen, bei welchem Wellenleiter oder bei welchem Antennensystem der Dichtring eine kleine Bauart aufweist und wobei der Dichtring zum Abdichten des Wellenleiters geeignet sein mag. Ferner mag der Dichtring für elektrische Signale, insbesondere für elektromagnetische Wellen, eine geringe Beeinflussung aufweisen. D.h. der Dichtring mag eine geringe Dämpfung für elektromagnetische Wellen aufweisen.

Als "HF-Chokes" (Hochfrequenz-Choke) mag eine radiale Aufweitung, Schulter oder Kragen der Anpassvorrichtung bezeichnet werden. Die Anpassvorrichtung kann eine eckige, kantige oder ovale Form aufweisen.

Gemäß einem Aspekt wird eine Verwendung einer Anpassvorrichtung bereitgestellt, welche einen Verschlusskörper und eine Aufweitung aufweist, wobei der Verschlusskörper eine Mantelfläche aufweist, welche ausgestaltet ist, mit einem Außenleiter eines Wellenleiters in Kontakt zu treten. Die Aufweitung ist an der Mantelfläche angeordnet und bildet einen vorgebbaren Abstand zwischen einem Kurzschluss und der Mantelfläche des Verschlusskörpers.

Gemäß einem weiteren Aspekt wird eine Antennenanordnung geschaffen, welche einen Hohlleiter, ein Antennenhorn und eine erfindungsgemäße Anpassvorrichtung aufweist. Die Anpassvorrichtung ist zwischen dem Hohlleiter und dem Antennenhorn angeordnet

Die Anordnung der Anpassvorrichtung zwischen dem Hohlleiter und dem Antennenhorn mag bedeuten, dass die Anpassvorrichtung derart angeordnet ist, dass ein Teil der Anpassvorrichtung in das Antennenhorn ragt und ein anderer Teil der Anpassvorrichtung in den Hohlleiter ragt.

Gemäß einem weiteren Aspekt der vorliegenden Erfindung wird ein Messgerät angegeben, welches eine erfindungsgemäße Antennenanordnung aufweist.

Gemäß einem weiteren Aspekt der vorliegenden Erfindung wird ein Verfahren zum Betreiben eines Wellenleiters geschaffen. Bei diesem Verfahren wird ein Verschlusskörper in dem Wellenleiter angeordnet, so dass eine Mantelfläche des Verschlusskörpers mit dem Außenleiter des Wellenleiters in Kontakt tritt. Ferner wird eine Aufweitung an der Mantelfläche des Verschlusskörpers angeordnet. Mittels dieser Aufweitung wird ein elektrischer Kurzschluss in einem Abstand von der Mantelfläche beabstandet, d.h. auf Distanz gehalten. Der Wellenleiter wird angeregt, so dass eine elektromagnetische Welle mit Wellenlänge λ entsteht, wobei der Abstand (w) ein ganzzahliges Vielfaches $n$ von λ/2 ist, wobei $n \geq 2$.

Der Kurzschluss, welcher von der Aufweitung auf die Mantelfläche transformiert wird, mag mittels eines Außenleiters des Hohlleiters gebildet werden, der die Aufweitung kontinuierlich, d.h. ohne Unterbrechung oder spaltlos umgeben mag.

Der Kurzschluss mag mit der Aufweitung in Berührung stehen. Da der Kurzschluss von der Aufweitung beabstandet werden soll, mag die Auffweitung derart ausgebildet sein, dass sie im Wesentlichen ohne dass auf die Aufweitung ein mechanischer Druck ausgeübt werden mag, den Kurzschluss beabstandet.

Der Kurzschluss mag in dem Außenleiter des Hohlleiters ausgebildet sein und bei einer bestimmten Wahl eines Abstandes, erfindungsgemäß einem mindestens 2-fachen Vielfachen der halben Wellenlänge einer Welle, welche in dem Wellenleiter übertragen wird, mag der Kurzschluss auf einen Kurzschluss auf der Mantelfläche des Verschlusskörpers transformiert werden.

In anderen Worten mag der Kurzschluss in dem Außenleiter des Hohlleiters ausgebildet sein. Der Kurzschluss mag für die HF ein scheinbarer Kurzschluss sein. Bei einer bestimmten Wahl eines Abstandes, beispielsweise bei einem Vielfachen der halben Wellenlänge einer Welle, welche in dem Wellenleiter übertragen wird, mag der Kurzschluss auf einen scheinbaren Kurzschluss auf der Mantelfläche des Verschlusskörpers transformiert werden.

Der Verschlusskörper mag kegelförmig oder zylindrisch ausgestaltet sein und mag eine mechanische Abtrennung zwischen zwei Räumen ermöglichen. Beispielsweise mag der Verschlusskörper einen Behälterinnenraum von einem Behälteraußenraum mechanisch trennen. So kann beispielsweise eine Diffusion von Materie zwischen zwei Räumen verhindert werden.

Der Kurzschluss mag durchgängig den Verschlusskörper, insbesondere die Aufweitung umgeben. In anderen Worten mag das bedeuten, dass der Wellenleiter in der Nähe der Aufweitung im Wesentlichen keinen Spalt aufweist und insbesondere, dass der Wellenleiter einstückig hergestellt ist. Beispielsweise mag der Wellenleiter ein Block aus einem leitfähigen Material wie Metall sein.

Wellenleiter können als Hohlleiter ausgebildet sein. Wellenleiter können auch ein Antennenhorn aufweisen. Mittels dem Wellenleiter mag eine elektromagnetische Welle in einen Innenraum eines Behälters oder Containers geführt werden. Sollten im Innenraum des Behälters andere Verhältnisse herrschen als im Außenraum, kann mittels einer Anpassvorrichtung eine Trennung der Verhältnisse aufrechterhalten werden.

So mag beispielsweise ein Konzentrationsunterschied von Materie zwischen einem Behälterinnenraum und einem Behälteraußenraum im Wesentlichen aufrechterhalten bleiben. Ätzende Flüssigkeiten oder Gase können von dem Außenraum abgetrennt werden oder unterschiedliche Drücke im Innenraum und Außenraum des Behälters können aufrechterhalten werden. Außerdem können Ex-Schutz (Explosionsschutz) Vorgaben oder Richtlinien eingehalten werden.

Die Aufweitung mag als radiale Aufweitung ausgestaltet sein, d.h. die Aufweitung mag sich im Wesentlichen rechtwinklig zu der Längsachse der Anpassvorrichtung erstrecken. Durch die geringen Ausmaße der Anpassvorrichtung mag der Platz an der radialen Aufweitung, nicht ausreichen, um eine, zwei oder eine Mehrzahl von Dichtungen an einer entsprechend abzudichtenden Stelle im Wellenleiter unterzubringen.

Die Anpassvorrichtung mag in einen Wellenleiter eingebracht sein. Die Aufweitung mag erlauben, die Fläche zu vergrößern, an der eine Dichtung, wie ein O-Ring, anbringbar ist, ohne dass die Anpassvorrichtung die Wellenausbreitung in dem Hohlleiter wesentlich stört.

Dazu mag die Anpassvorrichtung einen für die HF scheinbaren Kurzschluss am Ende der Aufweitung auf einen Kurzschluss an der Mantelfläche der Anpassvorrichtung transformieren. Somit mag die elektromagnetische Welle die Aufweitung nicht "sehen", an welcher die Dichtung angebracht ist. Um die Reflexionen an den Übergangsstellen möglichst klein zu halten mag an der Anpassvorrichtung ein Impedanzwandler angeordnet sein. Eine Ausführungsform eines Impedanzwandlers ist eine Kegelspitze. Die Ausbildung als Kegelspitze mag die Reflexionen bei dem Übergang von dem Material in dem Hohlleiter, z.B. Luft, zu dem Material der Anpassvorrichtung, z.B. PTFE, reduzieren.

Beispielsweise mag die Wellenlänge, welche von dem Wellenleiter übertragen werden soll im W-Band bei 79 GHz in PTFE (Polytetrafluorethylen) 2,62 mm betragen. Eine Aufweitung oder ein Kragen dessen radiale Ausdehnung ein mindestens 2-faches Vielfaches von $\lambda/2$ aufweist, mag am Kegel, d.h. an der Mantelfläche einer kegelförmigen oder zylinderförmigen Anpassvorrichtung, breiter als 1,31 mm sein. Die radiale Ausdehnung mag im Wesentlichen rechtwinklig zu der Längsachse der Anpassvorrichtung verlaufen. Ein O-Ring, der zum Abdichten in axialer Richtung des Wellenleiters vor oder hinter dem Kragen angeordnet ist, mag sich leicht anbringen lassen und mag nach den Regeln der Hochfrequenztechnik (d.h. HF-technisch) die Störungseinflüsse auf die Ausbreitung einer hochfrequenten Welle reduzieren.

Um eine vorgebbare Dichtwirkung zu erreichen, kann die Schnurstärke eines O-Rings variiert werden. Als Schnurstärke mag der Durchmesser des Teils eines O-Rings sein, welcher mit Materie gefüllt ist.

Die axiale Anordnung eines O-Rings an der Aufweitung mag die Montage des O-Rings gegenüber der radialen Anordnung des O-Rings vereinfachen. Mittels der axialen Anordnung oder der axialen Montage des O-Rings mag verhindert werden, dass der O-Ring zu weit aufgedehnt wird bis er montiert ist.

Ferner mag die axiale Anordnung des O-Rings verhindern, dass der O-Ring im Verhältnis zum Hohlleiter groß gewählt werden muss. So mag verhindert werden, dass der Signalweg der HF-Welle durch die Abdichtung gestört wird und dass störende Reflexionen auftreten.

Das W Band mag der Bereich des elektromagnetischen Spektrums sein, der von 75 bis 110 GHz (Giga Hertz) reicht.

Eine Frequenz, bei der eine elektromagnetische Welle übertragen wird mag als ein Frequenzband zu verstehen sein. Beispielsweise mag eine Übertragungsfrequenz von 79 GHz bedeuten, dass eine elektromagnetische Welle mit einer Mittenfrequenz von 79 GHz übertragen werden mag und eine Bandbreite von beispielsweise $\pm$ 2 GHz um die Mittenfrequenz aufweisen mag.

Angaben in diesem Dokument, die sich auf $\lambda$, $\lambda/2$ oder $\lambda/4$ beziehen mögen davon ausgehen, dass sie auf eine Mittenfrequenz eines Frequenzbandes bezogen sind und insbesondere auf eine zu dieser Mittenfrequenz gehörende Wellenlänge.

Denkbar wäre auch, dass die Anpassvorrichtung zum Einsatz im K Band geeignet ist, d.h. von 23 GHz - 27 GHz.

Gemäß einem weiteren Aspekt der vorliegenden Erfindung wird eine Anpassvorrichtung geschaffen, wobei der Abstand, in welchem durch die Anpassvorrichtung der Kurzschluss gehalten wird, größer als $\lambda/2$ ist.

Bei kleinen Wellenlängen mag die Anpassvorrichtung so dimensionierbar sein, dass eine Abdichtung, wie beispielsweise ein O-Ring, an der Aufweitung angeordnet werden kann.

Gemäß einem weiteren Aspekt der vorliegenden Erfindung weist der Abstand ein mindestens 2-faches, ganzzahliges Vielfaches von $\lambda/2$ auf.

Ein Kurzschluss, welcher in einem Abstand von der Mantelfläche gehalten wird, welcher mindestens einem 2-fachen, ganzzahligen Vielfachen von $\lambda/2$ entspricht, mag ebenfalls auf einen scheinbaren Kurzschluss auf der Mantelfläche transformiert werden, wie ein Kurzschluss in einem Abstand, der im Wesentlichen $\lambda/2$ entspricht.

Gemäß einem anderen Ausführungsbeispiel der vorliegenden Erfindung ist zwischen der Mantelfläche des Verschlusskörpers und der Aufweitung ein Winkel von 90° ausgebildet.

Die Form des Verschlusskörpers mag somit eine Zylinderform bzw. Rechteckform sein, welche sich in einem Rundhohlleiter bzw. Rechteckhohlleiter anordnen lässt.

Gemäß noch einem anderen Ausführungsbeispiel der vorliegenden Erfindung ist zwischen der Mantelfläche des Verschlusskörpers und der Aufweitung ein stumpfer Winkel ausgebildet.

Die Form des Verschlusskörpers mag somit eine Kegelform sein, welche sich in einem Hohlleiter beliebigen Querschnittes anordnen lässt.

Gemäß einem weiteren Aspekt der vorliegenden Erfindung wird eine Anpassvorrichtung geschaffen, welche eine Dichtung oder Abdichtung aufweist, wobei die Dichtung in der Ausbreitungsrichtung einer elektromagnetischen Welle vor und/oder hinter der Aufweitung angeordnet ist.

Die Aufweitung mag eine Befestigungsmöglichkeit für die Dichtung darstellen.

Gemäß einem anderen Aspekt der vorliegenden Erfindung liegt die Dichtung an der Aufweitung an.

Die Dichtung, Abdichtung oder der O-Ring mag an der Aufweitung anliegen. Die Dichtung mag also mit der Aufweitung in Kontakt stehen. Durch diesen Kontakt mag die Dichtwirkung vergrößert werden. Ein Materiestrom entlang der Aufweitung in die Richtung auf die Längsachse der Anpassvorrichtung zu mag im Wesentlichen unterdrückbar sein.

Gemäß noch einem anderen Aspekt der vorliegenden Erfindung liegt die Dichtung an der Mantelfläche an.

Das Anliegen der Dichtung an der Mantelfläche mag einen Materiestrom entlang der Mantelfläche in einer Richtung parallel zu der Längsachse der Anpassvorrichtung im Wesentlichen unterdrücken.

Gemäß noch einem anderen Aspekt der vorliegenden Erfindung ist die Mantelfläche des Verschlusskörpers ausgewählt aus der Gruppe der Mantelflächen bestehend aus einer Kegelfläche, einer Zylinderfläche, einer Rechteckfläche und einer Pyramidenfläche.

Auch mag jede Kombination der Mantelflächen denkbar sein. Die verschiedenen Formen mögen ein Anpassen an die Form des Wellenleiters erlauben. Ferner mögen die Formen Reflexionen von elektromagnetischen Wellen im Wesentlichen reduzieren.

Gemäß einem anderen Aspekt der vorliegenden Erfindung weist die Anpassvorrichtung in einem unkomprimierten Zustand oder in einem entspannten Zustand eine radiale Aufweitung auf, deren Länge im Wesentlichen ein mindestens 2-faches Vielfaches von $\lambda/2$ beträgt (im Folgenden dargestellt als $n\lambda/2$, $n\geq2$, n eine natürliche Zahl).

Wenn die Aufweitung eine Länge von $n\lambda/2$, $n\geq2$ aufweist, mag die Aufweitung den Kurzschluss in einem Abstand von $n\lambda/2$, $n\geq2$ halten, auch wenn der Abstand des Kurzschluss durch eine äußere Kraft ohne das Vorhanden sein der Aufweitung vergrößert oder verkleinert würde. Die Aufweitung mag somit auch als Stütze dienen, welche den Abstand von $n\lambda/2$, $n\geq2$ aufrechterhält. Die Länge der Aufweitung mag auch in dem eingebauten Zustand $n\lambda/2$, $n\geq2$ betragen. Durch diese Maßnahmen mag der Abstand von $n\lambda/2$, $n\geq2$ genauer einstellbar sein.

Viele Fortbildungen der Erfindung wurden bezugnehmend auf die Anpassvorrichtung beschrieben. Diese Ausgestaltungen gelten auch für die Antennenanordnung, das Messgerät und das Verfahren zum Verschließen eines Wellenleiters.

Es soll angemerkt werden, dass unterschiedliche Aspekte der Erfindung mit Bezug auf unterschiedliche Gegenständen beschrieben wurden. Insbesondere wurden einige Aspekte mit Bezug auf Vorrichtungsansprüche beschrieben, wohingegen andere Aspekte in Bezug auf Verfahrensansprüche beschrieben wurden. Ein Fachmann kann jedoch der vorangehenden Beschreibung und der folgenden Beschreibung entnehmen, dass, außer es wird anders beschrieben, zusätzlich zu jeder Kombination von Merkmalen die zu einer Kategorie von Gegenständen gehören auch jede Kombination zwischen Merkmalen, die sich auf unterschiedliche Kategorien von Gegenständen beziehen, gehören. Insbesondere sollen Kombinationen zwischen Merkmalen von Vorrichtungsansprüchen und Merkmalen von Verfahrensansprüchen offenbart sein.

Gemäß einem weiteren Aspekt der vorliegenden Erfindung wird das Messgerät ausgewählt aus der Gruppe der Messgeräte, bestehend aus einem Füllstandsmessgerät, Durchflussmessgerät, Druckmessgerät, einem Radarmessgerät, einem Messgerät basierend auf dem Prinzip der geführten Mikrowelle, einem Füllstandsradar, welches im Pulsbetrieb oder als FMCW-Gerät (Frequency Modulated Continuous Wave) arbeitet, und einem Laufzeitmessgerät.

Mit einer axialen Anordnung eines Dichtringes mögen sich Antennensysteme oder Antennenanordnungen für ein Füllstandsradar bauen lassen, die trotz ihrer kleinen Bauart gute Dichteigenschaften mit guten elektrische Eigenschaften kombinieren.

Die kleine Bauart mag durch die hohe Frequenz einer eingesetzten elektromagnetischen Welle bedingt sein.

Bezüglich der elektrischen Eigenschaften können geringere Leistungsverluste der Echoamplitude im Vergleich zu radial angebrachten O-Ringen erzielt werden. Außerdem mag die Neigung zum "Antennenklingeln" oder "Klingeln" gering ausfallen, da der Dichtring außerhalb des direkten Signalwegs der elektromagnetischen Welle angeordnet ist und somit der Einfluss der Materialeigenschaften des Dichtrings reduziert werden mag. "Klingeln" mag im Wesentlichen durch unerwünschte Reflexionen am Dichtring verursacht werden, kann aber beispielsweise auch schon an Übergangsstellen innerhalb der Antenne (beispielsweise zwischen PTFE-Spitze und Luft-HL (Luft-Hohlleiter)) entstehen.

Für Hohlleiter und Anpasskegel mögen keine speziellen Materialien verwendet werden müssen, sondern es können z.B. die üblicherweise benutzten Materialien wie Stahl und PTFE verwendet werden. Somit mögen Hohlleiter und Anpasskegel einfach und kostengünstig als Drehteile herstellbar sein. Dank der verwendeten Konstruktion des Anpasskegels mögen handelsübliche Dichtringe aller Materialien einsetzbar sein. Die Montage einer erfindungsgemäßen Antennenanordnung mag einfach sein und mag ohne spezielles Werkzeug (z.B. Presswerkzeug) durchführbar sein.

Im Folgenden werden vorteilhafte Ausführungsbeispiele der vorliegenden Erfindung mit Verweis auf die Figuren beschrieben:

Fig. 1 zeigt eine Seitenansicht einer Anpassvorrichtung gemäß einem exemplarischen Ausführungsbeispiel der vorliegenden Erfindung.

Fig. 2 zeigt eine Seitenansicht einer weiteren Anpassvorrichtung gemäß einem exemplarischen Ausführungsbeispiel der vorliegenden Erfindung.

Fig. 3 zeigt einen Längsschnitt durch eine Antennenanordnung mit der Anpassvorrichtung aus Fig. 2 gemäß einem exemplarischen Ausführungsbeispiel der vorliegenden Erfindung.

Fig. 4 zeigt einen Längsschnitt durch eine Antennenanordnung mit der Anpassvorrichtung aus Fig. 1 gemäß einem exemplarischen Ausführungsbeispiel der vorliegenden Erfindung.

Fig. 5 zeigt eine perspektivische Darstellung der Antennenanordnung aus Fig. 4 gemäß einem exemplarischen Ausführungsbeispiel der vorliegenden Erfindung.

Fig. 6 zeigt einen Längsschnitt durch eine weitere Antennenanordnung mit der Anpassvorrichtung aus Fig. 2 gemäß einem exemplarischen Ausführungsbeispiels der vorliegenden Erfindung.

Fig. 7 zeigt eine Antennenanordnung, bei der ein Kragen eines Anpasselements mit dem Flansch eines Antennenhorns verpresst ist, gemäß einem exemplarischen Ausführungsbeispiels der vorliegenden Erfindung.

Fig. 8 zeigt die Antennenanordnung der Figur 7, wobei zwischen dem Kragen des Anpasselements und dem Flansch des Antennenhorns eine Scheibe angeordnet ist, gemäß einem exemplarischen Ausführungsbeispiels der vorliegenden Erfindung.

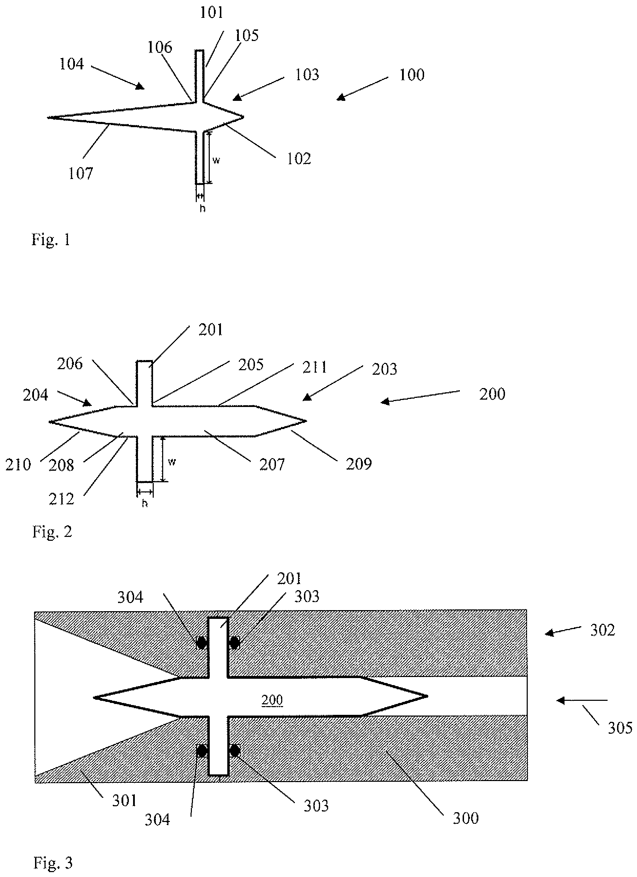

Die Darstellungen in den Figuren sind schematisch und nicht maßstäblich. In der folgenden Beschreibung der Fig. 1 bis Fig. 8 werden die gleichen Bezugsziffern für gleiche oder sich entsprechende Elemente verwendet.

Fig. 1 zeigt eine Seitenansicht einer Anpassvorrichtung 100. Die Anpassvorrichtung 100 ist nicht nur zum Trennen von zwei Räumen, z.B. einem Innenraum und einem Außenraum eines Behälters eingerichtet, sondern die Anpassvorrichtung 100 ist auch eingerichtet, um eine geringe Beeinflussung einer elektromagnetischen Welle zu bewirken. Da eine geringe Beeinflussung einer elektromagnetischen Welle, insbesondere einer hochfrequenten elektromagnetischen Welle (HF-Welle) erreichbar ist, wenn die Anpassvorrichtung 100 kegelförmige oder konusförmige Enden aufweist, wird die Anpassvorrichtung 100 auch als Anpasskegel 100 bezeichnet.

Die Anpassvorrichtung 100 kann ein rotationssymmetrisches Drehteil sein, welches beispielsweise aus PTFE gefertigt ist. Die Rotationsachse mag im Falle einer Rotationssymmetrie parallel zur Längsachse der Anpassvorrichtung 100 liegen. Die Anpassvorrichtung 100 weist ferner ein erstes kegelförmiges Ende 103 und ein zweites kegelförmiges Ende 104 auf. Mit ihren Basen, d.h. mit ihren Grundflächen, sind die beiden kegelförmigen Enden an dem kreisförmigen Kragen 101, an der ringförmigen Aufweitung 101 oder an dem kreisförmigen Flansch 101 angeordnet. Wobei im Falle der einstückigen Fertigung die Basen nicht mehr erkennbar sind.

Das erste kegelförmige Ende 103 und das zweite kegelförmige Ende 104 bilden beispielsweise einen Verschlusskörper.

Die Aufweitung 101 ist ein HF-Choke 101 und wird verwendet um eine Dichtung in axialer Richtung anzubringen. Mittels der axialen Dichtung mag sich eine geringe Dichtwirkung, welche die Aufweitung 101 alleine erzielen mag, erhöhen lassen.

In anderen Worten blockiert die Aufweitung 101 im Wesentlichen einen Fluss eines Fluids entlang der Manteloberfläche 102, 107 der beiden kegelförmigen Enden 103, 104. Um zu verhindern, dass sich ein Fluid um die Aufweitung herum ausbreiten kann, wird eine Dichtung in axialer Richtung an der Aufweitung 101 angeordnet. Insbesondere ist zum Abdichten an der Aufweitung 101 eine Dichtung angeordnet, wie beispielsweise ein O-Ring. In Fig. 1 ist die Dichtung jedoch nicht dargestellt.

Die Aufweitung 101 mag die Fläche vergrößern, an der eine Dichtung angebracht werden kann. Die Dichtung mag in einem eingebauten Zustand zwischen der Aufweitung und einem Wellenleiter oder dem Außenleiter eines Wellenleiters zu liegen kommen. Wird die Dichtung durch Druck zwischen die Aufweitung 101 und den Wellenleiter eingeklemmt, kann die Dichtwirkung der Dichtung erhöht werden.

Die Basen der beiden kegelförmigen Enden 103, 104 schließen sich direkt an die Aufweitung 101 an. Die Aufweitung ist rechtwinklig zu der Längsachse der Anpassvorrichtung 100 angeordnet. Somit ergibt sich zwischen dem kegelförmigen Ende 103, 104 und der Aufweitung 101 jeweils ein Winkel 105, 106, welcher größer als 90° ist, also ein stumpfer Winkel.

Zum Erhöhen der Abdichtwirkung kann in axialer Richtung vor oder hinter dem Kragen 101 ein Dichtring, beispielsweise ein O-Ring fest an dem Kragen 101 anliegend angeordnet sein.

Die Aufweitung 101 weist einen Abstand w oder eine Länge w von der äußersten Mantelfläche der Basis des ersten kegelförmigen Endes 103 von mehr als $\lambda/2$ auf. Dabei ist $\lambda$ die Wellenlänge einer elektromagnetischen Welle, welche sich ebenfalls, wie das Fluid, im Wesentlichen parallel zu der Symmetrieachse der Anpassvorrichtung ausbreitet. Die Länge w kann ein beliebiges Vielfaches von λ/2 sein. Je nachdem aus welcher Blickrichtung die Aufweitung 101 betrachtet wird, kann die Ausdehnung w der Aufweitung als Breite w oder Länge w bezeichnet werden. In einer Richtung senkrecht zur Längsachse der Anpassvorrichtung 100 mag die Aufweitung 101 die Länge w aufweisen. In Längsrichtung betrachtet, mag die Aufweitung 101 die Breite w aufweisen.

Die Breite w, die Länge w oder der Radius w mag dabei so gewählt werden, dass ein für die HF scheinbarer Kurzschluss, welcher sich an dem Ende der Aufweitung 101 befindet, welches Ende am weitesten von der Längsachse der Anpassvorrichtung entfernt ist, zu einem scheinbaren Kurzschluss auf der äußersten Mantelfläche des ersten kegelförmigen Endes 103 oder allgemein auf der äußersten Mantelfläche des Verschlusskörpers transformiert wird. Durch diese Transformation mag eine im Wesentlichen störungsfreie Ausbreitung einer elektromagnetischen Welle erfolgen, da der HF-Choke 101 im entsprechenden Frequenzband oder bei einer entsprechenden Mittenfrequenz für die HF sozusagen im Wesentlichen nicht sichtbar ist und deshalb im Wesentlichen keine, zumindest aber nur geringe Störungen durch Reflexionen verursacht.

Die Dicke h der Aufweitung 101 beträgt in axialer Richtung bezogen auf die Längsachse der Anpassvorrichtung λ/4 oder einen Wert sehr nahe bei λ/4 (λ/4 plus/minus 10%, d.h. von 0,9 λ/4 bis 1,1 λ/4). Andere Werte, wie z. B. 3 λ/4 oder auch andere Werte sind denkbar, allerdings können dann gewisse Störungen in Form von Reflexionen und/oder Dämpfungen auftreten. Die Form der Aufweitung 101 kann ringförmig, rechteckig, mehreckig oder oval sein.

Alternativ können das erste kegelförmige Ende 103 oder das zweite kegelförmige Ende 104 pyramidenförmig sein. Sollte die Anpassvorrichtung 100 für einen Rechteckhohlleiter eingesetzt werden, so kann die Basisfläche des ersten kegelförmigen Endes und des zweiten kegelförmigen Endes der Form des Rechteckhohlleiters entsprechen. Die Abmessungen können von der Wellenlänge λ abhängen. Bei einem Rundhohlleiter kann die Basisfläche bzw. der Verschlusskörper 102, 107 rund sein.

Bei der Anordnung nach Fig. 1 ist die Anpassvorrichtung 100 so geformt, dass die Anpassvorrichtung 100 HF-technisch im Wesentliche nicht stört und das Antennensystem trotzdem effizient abgedichtet werden kann. Durch die Aufweitung 101 der Anpassvorrichtung in der Form eines Kragens 101 wird an diesem abgedichtet, so dass die Dichtung im eigentlichen Signalweg im Wesentlichen nicht stört. In anderen Worten mag der S-Parameter $S_{11}$, d.h. die Reflexionsdämpfung oder die Rückflussdämpfung einen geringen Wert aufweist.

Der Abstand der Spitze der ersten kegelförmigen Endes 103 zur Basis des ersten kegelförmigen Endes 103 ist kleiner als der Abstand der Spitze des zweiten kegelförmigen Endes 104 zu der Basis des zweiten kegelförmigen Endes 104. Dadurch ist der Winkel an der Spitze des ersten kegelförmigen Endes 103 stumpfer als der Winkel an der Spitze des zweiten kegelförmigen Endes 104.

Die Anpassvorrichtung 100 gemäß der vorliegenden Erfindung ermöglicht, dass auch ein Antennensystem im W-Band noch effizient abgedichtet werden kann, ohne die HF wesentlich zu beeinflussen.

Die Aufweitung 101 ist ein mindestens 2-faches, ganzzahliges Vielfache von λ/2.

In Fig. 2 ist eine weitere Anpassvorrichtung 200 zu sehen. Für den Anpasskegel 200 oder die Anpassvorrichtung 200 gilt im Wesentlichen die Beschreibung des Anpasskegels 100 aus Fig. 1. Auch der Anpasskegel 200 weist ein erstes kegelförmiges Ende 203 und ein zweites kegelförmiges Ende 204 auf. Ebenso ist der Flansch 201, die Aufweitung 201, die Schulter 201 oder der Kragen 201 zu erkennen, welcher zwischen den beiden kegelförmigen Enden 203, 204 angeordnet ist.

Im Gegensatz zu Fig. 1 ist der Fig. 2 zusätzlich zu entnehmen, dass zwischen dem Flansch 201 und dem ersten kegelförmigen Ende 201 der erste Zylinderbereich 207 des Verschlusskörpers angeordnet ist. Außerdem ist zu erkennen, dass zwischen dem zweiten kegelförmigen Ende 204 und dem Flansch 201 der zweite Zylinderbereich 208 des Verschlusskörpers angeordnet ist. In anderen Worten bedeutet das, dass der Verschlusskörper jeweils einen Zylinderbereich 207, 208 und ein kegelförmiges Ende 201, 204 aufweist.

Der Verschlusskörper ist als massiver Köper ausgebildet.

Zwischen der Mantelfläche 211 des ersten Zylinderbereichs 207 und der Aufweitung 201 ist ein erster rechter Winkel 205 zu erkennen. Zwischen der Mantelfläche 212 des zweiten Zylinderbereichs 208 und der Aufweitung 201 ist der zweite rechte Winkel 206 zu erkennen.

Die Aufweitung 201 erstreckt sich über die Länge w oder die Breite w, welche ein mindestens 2-faches Vielfaches von λ/2 beträgt.

Die Form 211 der Mantelfläche des ersten Zylinderbereich 207 und die Form der Mantelfläche 212 des zweiten Zylinderbereichs 208 kann an die Form eines Hohlleiters angepasst sein. Ferner ist die Form der Mantelfläche 211 des ersten Zylinderbereich 207 und die Form der Mantelfläche 212 des zweiten Zylinderbereichs 208 an die Form der Basis des ersten kegelförmigen Endes 203 angepasst. Somit ist ein im Wesentlichen kontinuierlicher Übergang zwischen der Mantelfläche 209 des ersten kegelförmigen Endes 203 und der Mantelfläche des ersten Zylinderbereichs 207, sowie zwischen der Mantelfläche 210 des zweiten kegelförmigen Endes 204 und der Mantelfläche des zweiten Zylinderbereichs 208 möglich.

Der erste Zylinderbereich 207 und der zweite Zylinderbereich 208 kann jeweils unabhängig von einander ein Kreiszylinder oder ein Rechteckzylinder sein.

Der erste Zylinderbereich 207 ist länger als der zweite Zylinderbereich 208.

Sowohl die Anpassvorrichtung 100 als auch die Anpassvorrichtung 200 kann einteilig oder mehrteilig aufgebaut sein. Bei einem einteiligen Aufbau ist die Anpassvorrichtung 100, 200 beispielsweise als Drehteil oder Spritzteil hergestellt.

Bei einem zweiteiligen Aufbau sind die beiden Hälften entlang einer senkrechten Trennebene zu der Längsachse der Anpassvorrichtung 100, 200 getrennt oder auseinander geschnitten. Dabei kann die Trennebene durch die Aufweitung 101, 201 verlaufen, zwischen der Aufweitung 101, 201 und dem ersten kegelförmigen Ende 103, 203 liegen oder zwischen der Aufweitung 101, 201 und dem zweiten kegelförmigen Ende 103, 203 liegen.

Fig. 3 zeigt einen Längsschnitt durch eine Antennenanordnung 302 mit der Anpassvorrichtung 200 aus Fig. 2. Die Fig. 3 zeigt, wie der Anpasskegel 200 in ein Antennensystem 302 eingebaut ist.

Das Antennensystem 302 oder die Antennenanordnung 302 weist den Hohlleiter 300 und das Antennenhorn 301 auf. Das Antennenhorn 301 weist eine trichterförmige Aufweitung auf. Das Antennenhorn 301 kann einen rechteckigen oder runden Querschnitt aufweisen. Der Hohlleiter 300, insbesondere der Außenleiter 300 des Hohlleiters, das Antennenhorn 301 und die Anpassvorrichtung 200 können rotationssymmetrisch aufgebaut sein. Die zugehörigen Symmetrieachsen verlaufen parallel zu der Längsachse der Anpassvorrichtung 200 und bestimmen im Wesentlichen die Ausbreitungsrichtung einer elektromagnetischen Welle.

Allgemein mag in diesem Text unter der Ausbreitungsrichtung die auf ein Gut gerichtete Richtung einer Welle verstanden werden, wobei die Entfernung des Guts gemessen werden soll. In der zu dieser Richtung entgegen gesetzten Richtung mag eine reflektierte Welle verlaufen. Die Ausbreitungsrichtung ist in Fig. 3 mit dem Pfeil 305 gekennzeichnet.

Sowohl das Antennenhorn 301, als auch der Hohlleiter 300 sind mit Luft gefüllt. Es kann aber jedes beliebige Material, insbesondere jedes beliebige Dielektrikum zum Füllen eingesetzt werden.

Die Anpasseinrichtung 200 versperrt im Wesentlichen insbesondere mittels der Aufweitung 201 und mittels des Verschlusskörpers die Verbindung zwischen dem Antennenhorn 301 und dem Hohlleiter 300 für den Durchtritt eines Fluids. Das erste kegelförmige Ende 203 ragt in den Hohlleiter 300 und das zweite kegelförmige Ende 204 ragt in das Antennenhorn 301. Die Form der Anpassvorrichtung 200 ist derart angepasst, dass bei einer Anordnung der Anpasseinrichtung 200 in der Antennenanordnung 302 eine möglichst geringe Reflexion entsteht, d.h. dass der $S_{11}$ Wert oder $S_{11}$ Wellenparameter möglichst gering ist, während die Weite w des Kragens 201 oder die Breite w des Kragens von der Mantelfläche 211, 212 des Verschlusskörpers ab gemessen ein Vielfaches von $\lambda/2$ beträgt. Ein Beispiel für einen Wert für den S-Parameter S11 ist -20dB. Bei diesem Wert mag im Wesentlichen nur ein Hundertstel der eingespeisten Leistung zurückreflektiert werden.

Als Formel ausgedrückt bedeutet das, dass

$$w = n\,\lambda/2;\ n = 2,\ 3,\ 4,\ 5,\ 6,\ \ldots\ \text{ist}$$

Die Kragenweite w, d.h. die radiale Ausdehnung der Aufweitung 101, 201 ist ein Vielfaches n von $\lambda/2$, mit $n \geq 2$. Die Aufweitung 201, 101 kann auch als radiale Aufweitung bezeichnet werden. In axialer Richtung weist die radiale Aufweitung eine Dicke h auf. Die Dicke h der radialen Aufweitung kann im Bereich von $\lambda/4$ liegen.

Aus Gründen der Diffusionsdichtheit kann es beispielsweise nötig sein, dass die Dicke des Kragens 101, 201 dicker als $\lambda/4$ gewählt wird, wobei darauf zu achten ist, dass der $S_{11}$ Parameter noch unter einem vorgebbaren maximalen Wert liegt.

Der Dichtring 303, 304 oder die Dichtringe 303, 304 können sowohl vor als auch hinter dem Kragen 101, 102, der Aufweitung 101, 102 oder dem HF Choke 101, 102 angebracht werden. Es ist auch denkbar vor und hinter der Aufweitung 201 eine einzige Dichtung 303, 304 oder mehrere Dichtungen 303, 304 en anzubringen.

Zum Abdichten sind alle gängigen Dichtungsarten denkbar, beispielsweise ein, zwei oder mehrere O-Ringe. Ein O-Ring kann beispielsweise auch in einer Kerbe in einem der kegelförmigen Enden 102, 107, 209, 210, auf dem ersten Zylinderbereich 207 in einer Kerbe und/oder auf dem zweiten Zylinderbereich 208 in einer Kerbe angeordnet sein. Eine Kerbe kann beispielsweise als Nut, Verengung oder Ausnehmung ausgestaltet sein.

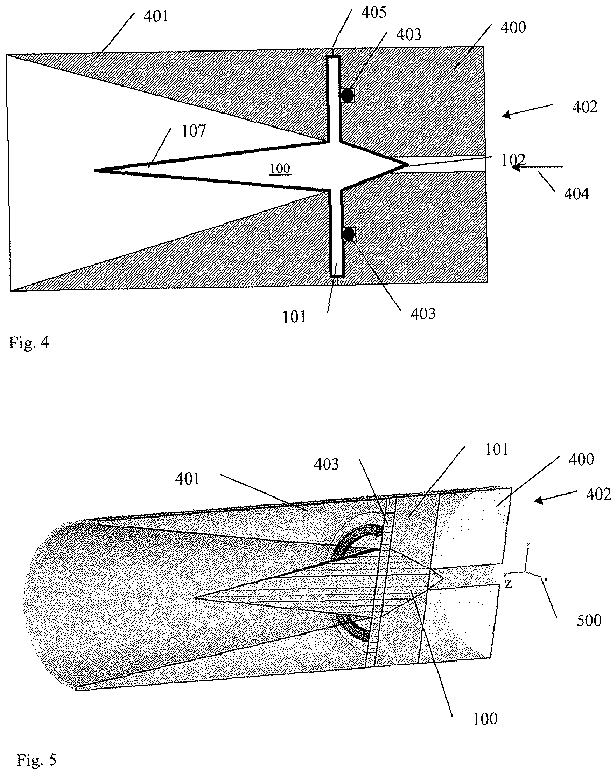

Die Fig. 4 zeigt einen Längsschnitt durch eine Antennenanordnung 402 mit der Anpassvorrichtung 100 oder dem Anpasskegel 100 aus der Fig. 1.

Eine Wellenausbreitungsrichtung bzw. die Richtung der Längsachse ist mit Pfeil 404 gekennzeichnet.

Ähnlich wie in Fig. 3 ist in Fig. 4 die Anpassvorrichtung 100 zwischen dem Hohlleiter 400 und dem Antennenhorn 401 angeordnet.

Das längere zweite kegelförmige Ende 107 ragt in das trichterförmige Antennenhorn 401, während das kürzere erste Kegelförmige Ende 102 in den Hohlleiter 400 hineinragt.

Der Hohlleiter 400 und das Antennenhorn 401 sind mit Luft gefüllt, können aber mit jedem beliebigen Dielektrikum gefüllt sein. Zwischen dem Hohlleiter 400, insbesondere dem Außenleiter 400 des Hohlleiters und dem Antennenhorn 401 mag ein Spalt 405 ausgebildet sein. Dieser Spalt mag die Montage und Demontage der Antennenanordnung 402 zum Einbau und zum Ausbau der Anpassvorrichtung 100 erleichtern. In einem eingebauten Zustand mag der Spalt 405 jedoch so gering sein, dass im Wesentlichen ein Kurzschluss für eine elektromagnetische Welle einer vorgebbaren Frequenz entstehen kann.

Die Antennenanordnung 302, 402 wird in einem eingebautem Zustand derart an einer Behälteraußenwand angeordnet, dass das trichterförmige Antennenhorn 401 in das Behälterinnere ragt und der Hohlleiter 300, 400 aus dem Behälter herausragt, so dass ein weiterer Leiter, insbesondere ein weiterer Hohlleiter, an dem Hohlleiter 300, 400 anschließbar ist. Dieser weitere Leiter kann z.B. der Wellenzuführung zu dem Hohlleiter oder als HF-Einkopplung dienen

In den Hohlleiter wird das HF-Signal des Mikrowellenmoduls eingekoppelt. Im Regelfall wird der Hohlleiter im Grundmode angeregt, so dass nur eine Mode ausbreitungsfähig ist. Beim Rundhohlleiter ist dies die $H_{11}$-Mode.

Die Querschnittsfläche des ersten Zylinderbereiches 207 oder des zweiten Zylinderbereiches 208 bzw. die Grundfläche oder die Basis des ersten kegelförmigen Endes 103, 203 oder die Grundfläche des zweiten kegelförmigen Endes 104, 204 richtet sich nach den Abmessungen des Hohlleiters 300, 400. Somit ist die Querschnittsfläche bzw. die Grundfläche von der Wellenlänge λ, abhängig welche in dem Hohlleiter 300, 400 übertragen werden soll.

Fig. 5 zeigt eine perspektivische Darstellung der Antennenanordnung aus Fig. 4 gemäß einem exemplarischen Ausführungsbeispiel der vorliegenden Erfindung. Darin ist die Mantelfläche des trichterförmigen Antennenhorn 401 zu erkennen, welche die Fortsetzung des Hohlleiters 400 bildet.

Die Antennenanordnung 402 kann als ein Wellenleiter angesehen werden. Der Wellenleiter kann ein Antennenhorn 401 und einen Hohlleiter 400 aufweisen.

Der Fig. 5 ist ebenfalls die axiale Anordnung des Dichtrings 403 an der Aufweitung 101 zu entnehmen. Das Koordinatensystem 500 zeigt, dass die Längsachse der Anpassvorrichtung 100 durch die Spitzen der Anpassvorrichtung in z-Richtung verläuft. Hier bezeichnet die z-Achse auch die Richtung der Längsachse der Anpassvorrichtung.

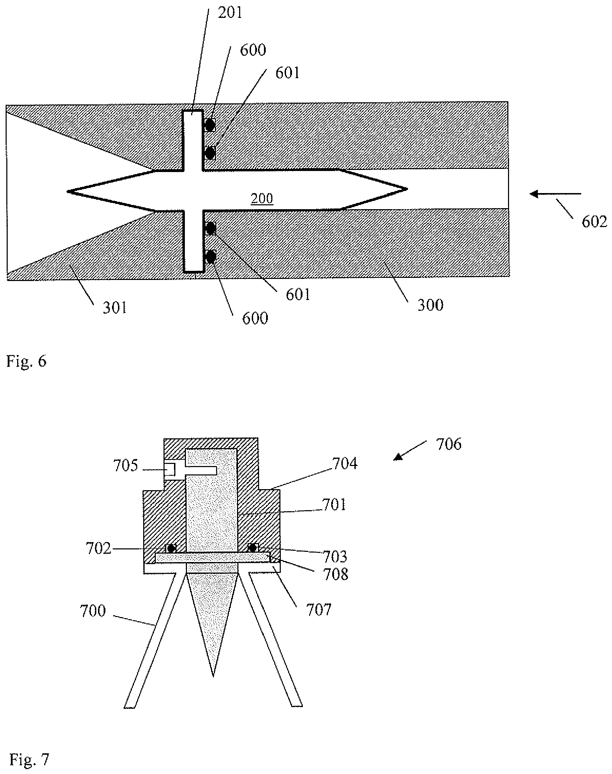

Fig. 6 zeigt einen Längsschnitt durch eine weitere Antennenanordnung 602 mit der Anpassvorrichtung 200 aus Fig. 2. Ähnlich wie in Fig. 3 ist die Anpassvorrichtung 200 in dem Hohlleiter 300 und dem Antennenhorn 301 angeordnet gezeigt. An der Aufweitung 201 sind auf der selben Seite der erste Dichtring 600 und der zweite Dichtring 601 angeordnet.

Um den ersten Dichtring 600 anzuordnen ist in dem Außenleiter 300 des Hohlleiters eine rechteckförmige Ausnehmung oder Nut angebracht, die geringere Abmessungen als die Schnurstärke des ersten Dichtrings 600 aufweist, so dass der erste Dichtring 600 zusammengedrückt wird. Ebenso ist um den zweiten Dichtring 601 eine zweite rechteckige Ausnehmung in dem Hohlleiter 300 ausgebildet, welche den zweiten Dichtring aufnimmt.

Antennensysteme oder Antennenanordnungen 302, 402 sollten derart eingerichtet sein, dass sie eine gute Impedanzanpassung von elektrischen Übergängen, wie beispielsweise dem Übergang zwischen einer Verbindungsleitung oder HF Zuführung und einem Hohlleiter 300 400, zwischen einem Hohlleiter 300, 400 und einer Antenne 301, 401 oder zwischen Antenne 301, 401 und Luft aufweisen, um möglichst geringe Störreflexionen zu erhalten.

Weiter sollte eine Antennenanordnung 302, 402 derart eingerichtet sein, eine im Wesentliche vollständige Abdichtung eines Behälters nach außen zu ermöglichen.

Die Anforderungen an Antennenanordnungen lassen sich mit zunehmender Frequenz (> 6GHz) möglicherweise nur schwer erfüllen. Anordnungen mit radialen Dichtringen am Anpasskegel 100, 200 der Antenneneinkopplung können in diesen Frequenzbereichen Leistungsverluste aufweisen. Die Leistungsverluste können dadurch verursacht werden, dass die Abmessungen der mechanischen Teile, wie Hohlleiter 300, 400, Anpasskegel 100, 200 etc. mit zunehmender Frequenz immer kleiner werden. Gleichzeitig sollte ein Dichtring (O-Ring) 304, 303, 403 derart eingerichtet sein, dass er eine bestimmte Schnurstärke hat und somit eine sichere Abdichtung gewährleistet.

Trotz der Reduzierung der Wellenlänge im Bereich höherer Frequenzen bleibt die Größe eines Dichtrings und somit die Größe des Einstichs unverändert. Durch die Reduzierung der Wellenlänge im Bereich höherer Frequenzen wird somit der Einstich oder die Nut, in welcher ein Dichtring 304, 303, 403 angeordnet ist, im Verhältnis zum Durchmesser des Zylinders 207, 208 des Anpasskegels 100, 200 bereits so groß, dass der Einstich die Ausbreitung der elektromagnetischen Welle stören kann. In Abhängigkeit der Materialeigenschaft des Dichtrings kann die Echoamplitude einer elektromagnetischen Welle gedämpft werden. Ferner kann sich ein "klingeln", d.h. eine unerwünschte Reflexion bemerkbar machen.

Ein Hohlleiter 300, 400 mit einem Anpasskegel 100, 200, bei dem der Dichtring 303, 304, 600, 601 axial angebracht wird, kann eine Dämpfung der Echoamplitude oder das "klingeln" verringern. Bei einem axial angebrachten O-Ring 303, 304, 600, 601 befindet sich der O-Ring mit seinen teilweise negativen elektrischen Eigenschaften im Wesentlichen außerhalb des direkten Signalwegs einer elektromagnetischen Welle.

Um eine Anordnung des Dichtrings 303, 304, 600, 601 außerhalb des Signalweges zu realisieren, kann eine Verdickung 101, 201 oder Aufweitung 101, 201 am Anpasskegel 100, 200 eingesetzt werden. Die Dicke h dieser Verbreiterung sollte im Bereich von λ./4 liegen. Der Radius des Anpasskegels 100, 200 wird an der Stelle der Verdickung 101, 201 um w = ein Vielfaches n von λ/2 (n≥2) erhöht.

Fig. 7 zeigt eine Antennenanordnung 706 bei der der das Anpasselement 701, insbesondere der Kragen 708 des Anpasselements 701, bzw. eine Dichtung 703, welche am Kragen 708 des Anpasselements angeordnet ist, mit dem Flansch 707 des Antennenhorns 700 verpresst ist. Der Anpasskegel 701 weist ein rechteckiges und ein spitzes Ende auf, wobei das rechteckige Ende ausgebildet ist, die HF-Einkopplung (Hochfrequenz Einkopplung) 705 aufzunehmen.

Der Anpasskegel 701 kann aus jeglichem Material mit dielektrischen Eigenschaften gefertigt sein. Der Dichtring 703, welcher in der ringförmigen Nut 702 angeordnet ist, kann aus allen für Dichtringe gebräuchlichen Materialien bestehen. Beispielsweise können für die Herstellung der Dichtringe 303, 304, 403, 600, 601, 703 Elastomere benutzt werden. Elastomere sind dehnbare Materialien. Durch die axiale Anordnung des Dichtrings können aber auch nichtdehnbare Dichtringe 303, 304, 403, 600, 601, 703 oder starre Dichtringe 303, 304, 403, 600, 601, 703 z.B. aus Metall oder FEP (Perfluorethylenpropylen-Copolymer) ummantelte Elastomere verwendet werden.

Der Einstich 702 oder die Nut 702 für den Dichtring 703 wird in den Hohlleiter so eingelassen, dass der verwendete O-Ring 703 ca. in der Mitte der Verdickung 708, insbesondere in der Mitte der Länge w der Verdickung 708, befindet und innen am Hohlleiter 704 anliegt, so dass der Dichtring 703 nach hinten (d.h. in Richtung zur HF-Einkopplung 705) abdichtet.

Bei der Antennenanordnung 706 der Fig. 7 wird der O-Ring 703 direkt mit dem Flansch 707 des Antennenhorns 700 verpresst.

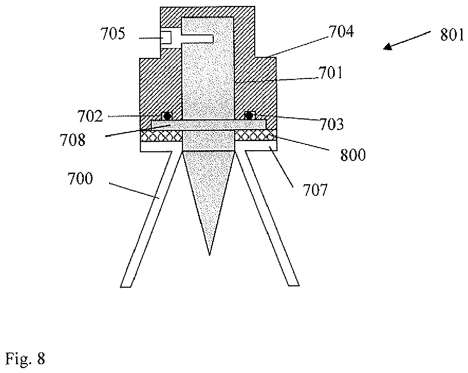

Die Fig. 8 zeigt eine Antennenanordnung 801 bei der zwischen dem Hohlleiter 704 und dem Antennenhorn 700 eine Scheibe 800 angeordnet ist. Im Gegensatz zur Fig. 7 ist in der Fig. 8 die Scheibe 800 vorhanden. Die Scheibe 800 ist zwischen dem Kragen 708 des Anpasselements 701 und dem Flansch 707 des Antennenhorns 700 angeordnet.

Bei der Antennenanordnung 801 wird der O-Ring 703 mit Hilfe einer zusätzlichen Scheibe 800, beispielsweise einem Metallring 800 verpresst, welche Scheibe 800 mit Senkkopfschrauben am Hohlleiter 704 befestigt wird. In anderen Worten, wird der O-Ring 703 von einem Druck, der von der Aufweitung 708 aufgebracht wird, in die Nut 702 des Hohlleiters 704 gepresst. Der Druck der Aufweitung 708 wird von einer Scheibe 800 erzeugt, welche mittels Senkkopfschrauben (nicht gezeigt in Fig. 8) gegen die Aufweitung 708 gedrückt wird, So wird der Anpasskegel 701 gegen das Herausfallen gesichert. Bei einem Wechseln des Antennenhorns 700 kann die Gefahr reduziert werden, dass der Anpasskegel 701 aus dem Hohlleiter 704 herausfällt.

Ergänzend ist darauf hinzuweisen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können, soweit sie unter die Patentansprüche fallen. Bezugszeichen in den Ansprüchen sind nicht als Einschränkung anzusehen.

**Patentansprüche**

1. Verwendung einer Anpassvorrichtung (100, 200) mit einem Wellenleiter (302, 402), der angeregt werden kann, so dass eine elektromagnetische Welle mit Wellenlänge λ entsteht, die Anpassvorrichtung (100,200) aufweisend:

    einen Verschlusskörper (103, 104, 203, 204);
    eine Aufweitung (101, 201);
    wobei der Verschlusskörper eine Mantelfläche (102, 107, 211, 212) aufweist, wobei die Mantelfläche (102, 107, 211, 212) ausgestaltet ist, mit einem Außenleiter des Wellenleiters (302, 402) in Kontakt zu treten;
    wobei die Aufweitung (101, 201) an der Mantelfläche (102, 107) angeordnet ist;
    wobei die Aufweitung (101, 201) derart ausgestaltet ist, dass die Aufweitung (101, 201) einen elektrischen Kurzschluss in einem vorgebbaren Abstand (w) von der Mantelfläche (102, 107, 211, 212) des Verschlusskörpers (103, 104, 203, 204) beabstandet; die Anpassvorrichtung weiter aufweisend
    eine als diskretes Bauteil ausgebildete Dichtung (303, 304, 403, 600, 601, 702,703),
    wobei die Dichtung (303, 304, 403, 600, 601, 702,703) in der Ausbreitungsrichtungsrichtung einer ausgehenden elektromagnetischen Welle vor und/oder hinter der Aufweitung (101, 201) und an der Aufweitung (101, 201) anliegend angeordnet ist, wobei der Abstand (w) ein ganzzahliges Vielfaches $n$ von λ/2 ist, wobei $n \geq 2$.

2. Verwendung einer Anpassvorrichtung (100, 200) nach Anspruch 1, wobei zwischen der Mantelfläche (102, 107, 211, 212) des Verschlusskörpers und der Aufweitung (101, 201) ein Winkel (205, 206) von 90° ausgebildet ist.

3. Verwendung einer Anpassvorrichtung (100, 200) nach einem der Ansprüche 1 bis 2, wobei zwischen der Mantelfläche (102, 107, 211, 212) des Verschlusskörpers und der Aufweitung (101, 201) ein stumpfer Winkel (105, 106) ausgebildet ist.

4. Verwendung einer Anpassvorrichtung (100, 200) nach Anspruch 1 oder 3, wobei die Dichtung (303, 304, 403, 600, 601, 702,703) an der Mantelfläche anliegend angeordnet ist.

5. Verwendung einer Anpassvorrichtung (100, 200) nach einem der Ansprüche 1 bis 4, wobei die Mantelfläche (102, 107, 211, 212) des Verschlusskörpers ausgewählt aus der Gruppe der Mantelflächen bestehend aus einer Kegelfläche, einer Zylinderfläche, einer Rechteckfläche und einer Pyramidenfläche ist.

6. Messgerät aufweisend eine Antennenanordnung, umfassend einen Wellenleiter (302, 402) und ein Mikrowellenmodul eingerichtet zum Erzeugen einer elektromagnetischen Welle mit Wellenlänge $\lambda$, die in den Wellenleiter (302, 402) einkoppelbar ist, und eine Anpassvorrichtung (100, 200) eingerichtet zum Verschließen einer Öffnung des Wellenleiters (302, 402), wobei die Anpassvorrichtung (100, 200) umfasst:

   einen Verschlusskörper (103, 104, 203, 204);
   eine Aufweitung (101, 201);
   wobei der Verschlusskörper eine Mantelfläche (102, 107, 211, 212) aufweist, wobei die Mantelfläche (102, 107, 211, 212) ausgestaltet ist, mit einem Außenleiter des Wellenleiters (302, 402) in Kontakt zu treten;
   wobei die Aufweitung (101, 201) an der Mantelfläche (102, 107) angeordnet ist;
   wobei die Aufweitung (101, 201) derart ausgestaltet ist, dass die Aufweitung (101, 201) einen elektrischen Kurzschluss in einem vorgebbaren Abstand (w) von der Mantelfläche (102, 107, 211, 212) des Verschlusskörpers (103, 104, 203, 204) beabstandet;
   die Anpassvorrichtung weiter aufweisend eine als diskretes Bauteil ausgebildete Dichtung (303, 304, 403, 600, 601, 702,703), wobei die Dichtung (303, 304, 403, 600, 601, 702,703) in der Ausbreitungsrichtungsrichtung einer ausgehenden elektromagnetischen Welle vor und/oder hinter der Aufweitung (101, 201) und an der Aufweitung (101, 201) anliegend angeordnet ist, wobei der Abstand (w) ein ganzzahliges Vielfaches $n$ von $\lambda/2$ ist, wobei $n \geq 2$.

7. Messgerät nach Anspruch 6, wobei das Messgerät ausgewählt ist aus der Gruppe der Messgeräte bestehend aus einem Füllstandsmessgerät, Durchflussmessgerät, Druckmessgerät, einem Radarmessgerät, einem Messgerät basierend auf dem Prinzip der geführten Mikrowelle und einem Laufzeitmessgerät.

8. Messgerät nach Anspruch 6 oder 7, weiter umfassend ein Antennenhorn (301, 401), wobei die Anpassvorrichtung (100, 200) zwischen dem Wellenleiter (300, 400) und dem Antennenhorn (301, 401) angeordnet ist.

9. Verfahren zum Betreiben eines Wellenleiters, aufweisend:

   Anordnen eines Verschlusskörpers (103, 104, 203, 204) in dem Wellenleiter (300, 400, 704) derart, dass eine Mantelfläche (102, 107, 211, 212) des Verschlusskörpers mit einem Außenleiter des Wellenleiters in Kontakt tritt;
   Anordnen einer Aufweitung (101, 102) an einer Mantelfläche (102, 107, 211, 212) des Verschlusskörpers;
   Beabstanden mittels der Aufweitung (101, 102) eines elektrischen Kurzschlusses in einem Abstand (w) von der Mantelfläche (102, 107, 211, 212) des Verschlusskörpers;
   Anordnen einer als diskretes Bauteil ausgebildeten Dichtung (303, 304, 403, 600, 601, 702,703) in der Ausbreitungsrichtungsrichtung einer ausgehenden elektromagnetischen Welle vor und/oder hinter der Aufweitung (101, 201) und an der Aufweitung (101, 201) anliegend,
   Anregen des Wellenleiters so dass eine elektromagnetische Welle mit Wellenlänge $\lambda$ entsteht, wobei der Abstand (w) ein ganzzahliges Vielfaches $n$ von $\lambda/2$ ist, wobei $n \geq 2$.

**Claims**

1. Use of an adaptation apparatus (100, 200) comprising a waveguide (302, 402), which waveguide is able to be excited, so that an electromagnetic wave with wavelength $\lambda$ is generated, the adaptation apparatus (100, 200) comprising:

   a closing-off body (103, 104, 203, 204);
   an enlargement (101, 201);
   wherein the closing-off body comprises a jacket surface (102, 107, 211, 212),
   wherein the jacket surface (102, 107, 211, 212) is configured to establish contact with an external conductor of the waveguide (302, 402);
   wherein the enlargement (101, 201) is arranged on the jacket surface (102, 107);
   wherein the enlargement (101, 201) is configured such that the enlargement (101, 201) spaces apart an electrical short circuit at a predeterminable space (w) from the jacket surface (102, 107, 211, 212) of the closing-off body (103, 104, 203, 204); the adaptation apparatus further comprising:
   a seal (303, 304, 403, 600, 601, 702, 703) formed as a discrete component,
   wherein the seal (303, 304, 403, 600, 601, 702, 703) is arranged in the propagation direction of an outgoing electromagnetic wave in front of and/or behind the enlargement (101, 201) and so as to rest against the enlargement (101, 201), wherein the space (w) is an integer multiple n of $\lambda/2$, wherein $n \geq 2$.

2. The use of an adaptation apparatus (100, 200) according to claim 1, wherein an angle (205, 206) of 90° is formed between the jacket surface (102, 107, 211, 212) of the closing-off body and the enlargement (101, 201).

**3.** The use of an adaptation apparatus (100, 200) according to any one of claims 1 to 2, wherein an obtuse angle (105, 106) is formed between the jacket surface (102, 107, 211, 212) of the closing-off body and the enlargement (101, 201).

**4.** The use of an adaptation apparatus (100, 200) according to claim 1 or 3, wherein the seal (303, 304, 403, 600, 601, 702, 703) is arranged so as to rest against the jacket surface.

**5.** The use of an adaptation apparatus (100, 200) according to any one of claims 1 to 4, wherein the jacket surface (102, 107, 211, 212) of the closing-off body is selected from the group of jacket surfaces consisting of a cone surface, a cylinder surface, a rectangle surface and a pyramid surface.

**6.** A measuring device comprising an antenna, comprising a waveguide (302, 402) and a microwave module configured to generate an electromagnetic wave with wavelength $\lambda$, which is able to couple into the waveguide (302, 402), and an adaptation apparatus (100, 200) configured to close off an opening of the waveguide (302, 402), wherein the adaptation apparatus (100, 200) comprises:

a closing-off body (103, 104, 203, 204);
an enlargement (101, 201);
wherein the closing-off body comprises a jacket surface (102, 107, 211, 212),
wherein the jacket surface (102, 107, 211, 212) is configured to establish contact with an external conductor of the waveguide (302, 402);
wherein the enlargement (101, 201) is arranged on the jacket surface (102, 107);
wherein the enlargement (101, 201) is configured such that the enlargement (101, 201) spaces apart an electrical short circuit at a predeterminable space (w) from the jacket surface (102, 107, 211, 212) of the closing-off body (103, 104, 203, 204); the adaptation apparatus further comprising:
a seal (303, 304, 403, 600, 601, 702, 703) formed as a discrete component,
wherein the seal (303, 304, 403, 600, 601, 702, 703) is arranged in the propagation direction of an outgoing electromagnetic wave in front of and/or behind the enlargement (101, 201) and so as to rest against the enlargement (101, 201),
wherein the space (w) is an integer multiple n of $\lambda/2$, wherein n$\geq$2.

**7.** The measuring device according to claim 6, wherein the measuring device is selected from the group of measuring devices consisting of a fill-level measuring device, a flow-through measuring device, a pressure measuring device, a radar measuring device, a measuring device based on the principle of the guided microwave, and a transit-time measuring device.

**8.** The measuring device according to claim 6 or 7, further comprising an antenna horn (301, 401), wherein the adaptation apparatus (100, 200) is arranged between the waveguide (300, 400) and the antenna horn (301, 401).

**9.** A method for operating a waveguide, comprising:

arranging a closing-off body (103, 104, 203, 204) in the waveguide (300, 400, 704) such that a jacket surface (102, 107, 211, 212) of the closing-off body establishes contact with an external conductor of the waveguide;
arranging an enlargement (101, 102) on a jacket surface (102, 107, 211, 212) of the closing-off body;
spacing apart, by means of the enlargement (101, 102), an electrical short circuit at a distance (w) from the jacket surface (102, 107, 211, 212) of the closing-off body;
arranging a seal (303, 304, 403, 600, 601, 702, 703) as a discrete component in the propagation direction of an outgoing electromagnetic wave in front of and/or behind the enlargement (101, 201) and so as to rest against the enlargement (101, 201),
activating the waveguide such that an electromagnetic wave with wavelength $\lambda$ is generated, wherein the space (w) is an integer multiple n of $\lambda/2$, wherein n$\geq$2.

**Revendications**

**1.** Utilisation d'un dispositif d'adaptation (100, 200) comportant un guide d'ondes (302, 402) qui peut être activé de sorte qu'une onde électromagnétique ayant une longueur d'onde $\lambda$ est générée, le dispositif d'adaptation (100, 200) comportant :

un corps d'obturation (103, 104, 203, 204),
un élargissement (101, 201),
dans laquelle le corps d'obturation comporte une surface d'enveloppe (102, 107, 211, 212),
la surface d'enveloppe (102, 107, 211, 212) étant configurée pour venir en contact avec un conducteur extérieur du guide d'ondes (302, 402),
dans laquelle l'élargissement (101, 201) est agencé sur la surface d'enveloppe (102, 107),
dans laquelle l'élargissement (101, 201) est configuré de sorte que l'élargissement (101, 201) espace un court-circuit électrique à une distance (w) pouvant être prédéfinie de la surface d'enveloppe (102, 107, 211, 212) du corps d'obturation (103, 104, 203, 204), le dispositif d'adaptation comportant en outre :

un joint (303, 304, 403, 600, 601, 702, 703) formé comme un composant discret, dans laquelle le joint (303, 304, 403, 600, 601, 702, 703) est agencé dans la direction de propagation d'une onde électromagnétique émise devant et/ou derrière l'élargissement (101, 201) et sur l'élargissement (101, 201), la distance (w) étant un multiple entier n de λ/2, avec n≥2.

**2.** Utilisation d'un dispositif d'adaptation (100, 200) selon la revendication 1, dans laquelle un angle de 90° est formé entre la surface d'enveloppe (102, 107, 211, 212) du corps d'obturation et l'élargissement (101, 201).

**3.** Utilisation d'un dispositif d'adaptation (100, 200) selon l'une des revendications 1 à 2, dans laquelle un angle obtus (105, 106) est formé entre la surface d'enveloppe (102, 107, 211, 212) du corps d'obturation et l'élargissement (101, 201).

**4.** Utilisation d'un dispositif adaptation (100, 200) selon la revendication 1 ou 3, dans laquelle le joint (303, 304, 403, 600, 601, 702, 703) est agencé sur la surface d'enveloppe.

**5.** Utilisation d'un dispositif d'adaptation (100, 200) selon l'une des revendications 1 à 4, dans laquelle la surface d'enveloppe (102, 107, 211, 212) du corps d'obturation est choisie dans le groupe des surfaces extérieures constitué d'une surface conique, d'une surface cylindrique, d'une surface rectangulaire et d'une surface pyramidale.

**6.** Appareil de mesure comportant un agencement d'antenne, comprenant un guide d'ondes (302, 402) et un module à micro-ondes configuré pour générer une onde électromagnétique ayant une longueur d'onde λ, qui peut être introduite dans le guide d'ondes (302, 402) et un dispositif d'adaptation (100, 200) configuré pour obturer une ouverture du guide d'ondes (302, 402), dans lequel le dispositif d'adaptation (100, 200) comprend :

un corps d'obturation (103, 104, 203, 204), un élargissement (101, 201), dans lequel le corps d'obturation comporte une surface d'enveloppe (102, 107, 211, 212), la surface d'enveloppe (102, 107, 211, 212) étant configurée pour venir en contact avec un conducteur extérieur du guide d'ondes (302, 402), dans lequel l'élargissement (101, 201) est agencé sur la surface d'enveloppe (102, 107), dans lequel l'élargissement (101, 201) est configuré de sorte que l'élargissement (101, 201) espace un court-circuit électrique à une distance (w) pouvant être prédéfinie de la surface d'enveloppe (102, 107, 211, 212) du corps d'obturation (103, 104, 203, 204), le dispositif d'adaptation comportant en outre :
un joint (303, 304, 403, 600, 601, 702, 703) formé comme un composant discret, dans lequel le joint (303, 304, 403, 600, 601, 702, 703) est agencé dans la direction de propagation d'une onde électromagnétique sortante devant et/ou derrière l'élargissement (101, 201) et sur l'élargissement (101, 201), la distance (w) étant un multiple entier n de λ/2, dans lequel n≥2.

**7.** Appareil de mesure selon la revendication 6, dans lequel l'appareil de mesure est choisi dans le groupe des appareils de mesure constitué d'un appareil de mesure de niveau de remplissage, d'un appareil de mesure de débit, d'un appareil de mesure de pression, d'un appareil de mesure radar, d'un appareil de mesure basé sur le principe de la micro-onde guidée et d'un appareil de mesure de temps de transit.

**8.** Appareil de mesure selon la revendication 6 ou 7, comprenant en outre un cornet d'antenne (301, 401), dans lequel le dispositif d'adaptation (100, 200) est agencé entre le guide d'ondes (300, 400) et le cornet d'antenne (301, 401).

**9.** Procédé pour faire fonctionner un guide d'ondes, comportant les étapes consistant à :

agencer un corps d'obturation (103, 104, 203, 204) dans le guide d'ondes (300, 400, 704) de telle sorte qu'une surface d'enveloppe (102, 107, 211, 212) du corps d'obturation vient en contact avec un guide extérieur du guide d'ondes, agencer un élargissement (101, 102) sur une surface d'enveloppe (102, 107, 211, 212) du corps d'obturation, espacer au moyen de l'élargissement (101, 102) un court-circuit électrique à une distance (w) de la surface d'enveloppe (102, 107, 211, 212) du corps d'obturation, agencer un joint (303, 304, 403, 600, 601, 702, 703) formé comme un composant discret, dans lequel le joint (303, 304, 403, 600, 601, 702, 703) est agencé dans la direction de propagation d'une onde électromagnétique émise devant et/ou derrière l'élargissement (101, 201) et sur l'élargissement (101, 201), activer le guide d'ondes de sorte qu'une onde électromagnétique ayant une longueur d'onde λ est générée, la distance (w) étant un multiple

entier n de $\lambda/2$, dans lequel n$\geq$2.

Fig. 1

Fig. 2

Fig. 3

Fig. 4

Fig. 5

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5872494 A
- EP 1643222 A
- US 20030179148 A
- US 5305237 A
- US 20070008212 A